Europäisches Patentamt

European Patent Office

Office européen des brevets

(19)

(11) Veröffentlichungsnummer: **0 268 755**
**B1**

# (12) EUROPÄISCHE PATENTSCHRIFT

(45) Veröffentlichungstag der Patentschrift:
**17.10.90**

(51) Int. Cl.⁵: **B29C 65/20**

(21) Anmeldenummer: **87112443.4**

(22) Anmeldetag: **27.08.87**

(54) **Kunststoff-Schweissmaschine.**

(30) Priorität: **25.11.86 DE 8631465 U**

(43) Veröffentlichungstag der Anmeldung:
**01.06.88 Patentblatt 88/22**

(45) Bekanntmachung des Hinweises auf die Patenterteilung:
**17.10.90 Patentblatt 90/42**

(84) Benannte Vertragsstaaten:
**AT CH DE IT LI**

(56) Entgegenhaltungen:
**AT-B- 194 130**
**DD-A- 49 995**
**DD-A- 102 106**
**DD-A- 102 337**
**DE-A- 732 156**

(73) Patentinhaber: **Pfaff Industriemaschinen GmbH,
Königstrasse 154, D-6750 Kaiserslautern(DE)**

(72) Erfinder: **Greller, Peter, Hauptstrasse 5a,
D-6753 Enkenbach(DE)**

(74) Vertreter: **Klein, Friedrich, Königstrasse 154,
D-6750 Kaiserslautern(DE)**

**Beschreibung**

Die Erfindung betrifft ein Verfahren nach dem Oberbegriff des Patentanspruches 1.

Eine durch die DE-A 732 156 bekannte Kunststoff-Schweißmaschine zum überlappten Verschweißen zweier thermoplastischer Kunststoffolien weist einen elektrisch beheizten Heizkeil auf, der während des Schweißvorganges in stetigem Kontakt mit den Folien steht. Ein mit geringem Abstand hinter dem Heizkeil angeordnetes, angetriebenes Druckrollenpaar bewirkt einen kontinuierlichen Transport der Folien und ein Zusammenpressen der erweichten Folienabschnitte wodurch diese homogen miteinander verbunden werden. Der Heizkeil besteht aus Silber und damit aus einem Werkstoff mit einer sehr hohen Wärmeleitfähigkeit. Auf diese Weise erfolgt eine vergleichsweise sehr rasche Wärmeübertragung vom Heizkeil auf die Folien, so daß der Schweißvorgang mit verhältnismäßig großer Vorschubgeschwindigkeit durchgeführt werden kann.

Derartige Schweißmaschinen haben sich für das Verschweißen von bestimmten thermoplastischen Kunststoffolien, wie z. B. PVC-Folien, gut bewährt, da sich einerseits die Schweißnaht ebenflächig und verzerrungsfrei herstellen läßt und andererseits auch in den an die Schweißnaht angrenzenden Randzonen keine Verzerrungen auftreten. Dagegen kann es beim Verschweißen von Polyäthylen- und Polypropylenfolien vorkommen, daß in den Rändern der Schweißnaht und den an die Schweißnaht angrenzenden Randzonen wellenartige Verformungen auftreten, die das Aussehen und ggf. die Gebrauchsfähigkeit des geschweißten Gegenstandes ganz erheblich beeinträchtigen.

Das unterschiedliche Schweißverhalten dieser Kunststoffolien ist dadurch begründet, daß PVC amorph strukturiert ist. Polyäthylen und Polypropylen dagegen eine teilkristalline Struktur aufweisen. Da bei einer teilkristallinen Struktur im Gegensatz zu einer amorphen Struktur während des Erwärmens im Schweißnahtbereich und in abgeschwächter Form auch in dem unmittelbar angrenzenden Randbereich eine Strukturveränderung eintritt, die sich während des anschließenden Abkühlvorganges wieder zurückbildet, könnte es während der Abkühlphase zu Störungen bei der Rückbildung des teilkristallinen Gefüges kommen, welche die genannten wellenförmigen Verformungen hervorrufen.

Für die Durchführung von Wärmepulsschweißungen sind Heizelemente bekannt, die aus einer elektrisch aufheizbaren Heizleiterschicht, einer elektrisch nichtleitenden aber wärmeleitenden Isolierschicht und aus einem Wärmeableitungskörper bestehen, wobei die Heizelemente zugleich eine ebene Andruckfläche aufweisen. In der AT-194 130 ist ein für die Durchführung con Wärmeimpulsschweißungen dienendes Heizelement beschrieben, bei dem zur Vermeidung von scharf eingegrabenen Nahträndern drei oder mehrere nebeneinander angeordnete Heizleiterschichten angeordnet sind, von denen die mittlere oder die mittleren auf die Schweißtemperatur impulsartig aufgeheizt und die seitlich angeordneten Heizleiterschichten in nur geringem Maße erhitzt werde. Zu diesem Zweck werden die Heizleiterschichten entweder durch unterschiedliche Stromzufuhr oder durch Verwendung unter schiedlicher Materialien unterschiedlich aufgeheizt. Durch die unterschiedlichen Wärmezonen werden in Verbindung mit einer Druckzone, die breiter als die Hauptwärmezone ist, flach auslaufende Nahtränder und damit Ergebnisse erzielt, die grundsätzlich auch durch eine entsprechende Abflachung bzw. Abrundung der Seitenkanten des Heizelementes erreichbar wären.

Abgesehen von dem völlig unterschiedlichen Verwendungszweck ist ein für stationär durchzuführende Wärmeimpuls-Schweißarbeiten vorgesehenes und dabei für die gleichzeitige Erwärmung und Schweißdruckerzeugung dienendes Heizelement nicht für kontinuierlich erfolgende Schweißarbeiten geeignet, bei denen für die Erwärmung und Schweißdruckerzeugung jeweils eigene Werkzeuge verwendet werden.

Der Erfindung liegt die Aufgabe zugrunde, ein Verfahren zum kontinuierlichen Verschweißen teilkristallin strukturierter Kunststoffolien zu entwickeln, bei dem das Auftreten von wellenartigen Verformungen in den Randzonen der Schweißnaht vermieden wird. Die Aufgabe wird durch das kennzeichnende Merkmal des Patentanspruches 1 gelöst.

Durch die Maßnahme, die Kunststoffolien in den Randzonen der Schweißnaht weniger stark als im Bereich der Schweißnaht aufzuwärmen, findet während des Schweißens zwischen den erweichten Folienabschnitten im Bereich des Heizkeiles und den seitlich des Heizkeiles befindlichen Folienbereichen kein schroffer Temperatursprung sondern eine weniger krasse, im günstigsten Fall kontinuierliche Temperaturabsenkung statt. Infolge des sich in einem größeren Folienbereich auswirkenden und damit flacheren Temperaturgefälles verläuft die Rückbildung der teilkristallinen Struktur nicht gleichzeitig über die gesamte Breite des erwärmten Bereiches sondern von den seitlichen Randzonen aus zeitverzögert in Richtung auf die Schweißnahtmitte, wodurch sich im Übergangsbereich zwischen dem Folienbereich, in dem zuvor die höchste Temperatur herrschte, und den nicht erwärmten Folienbereichen ein gleichmäßigeres Strukturgefüge einstellt. Auf diese Weise wird bei teilkristallin strukturierten Kunststoffolien eine ebenflächige, verzerrungsfreie Schweißnaht erzielt und die Bildung von wellenartigen Verformungen in den angrenzenden Randzonen verhindert.

Anspruch 2 gibt für die Durchführung des Verfahrens eine einfach zu realisierende Ausführungsform eines erfindungsgemäß ausgebildeten Heizkeils an, indem ein mittlerer Abschnitt beispielsweise aus Silber besteht und für die äußeren Abschnitte rostfreier Stahl gewählt wird.

Durch die Maßnahme nach Anspruch 3 ist gewährleistet, daß die im Bereich der zu bildenden Schweißnaht liegenden Folienabschnitte über die gesamte Breite der Schweißnaht auf die für eine einwandfreie Verschweißung erforderliche Temperatur erwärmt werden können.

Die Erfindung ist anhand eines in der Zeichnung dargestellten Ausführungsbeispieles erläutert. Es zeigen:

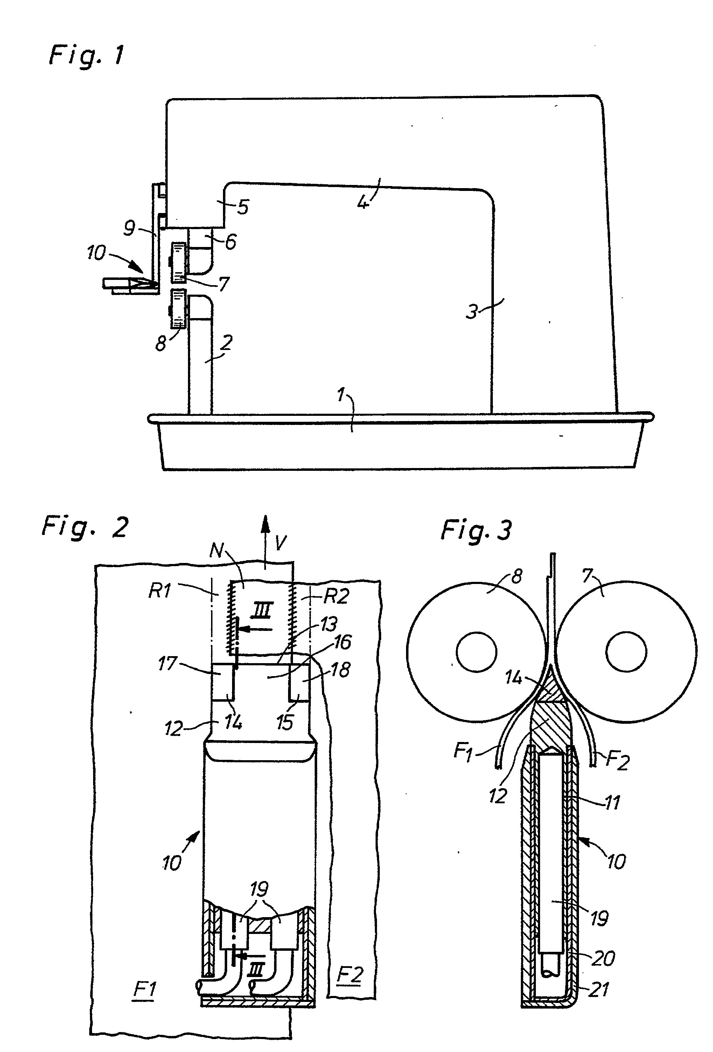

Fig. 1 eine Ansicht einer Schweißmaschine;
Fig. 2 eine Draufsicht auf einen teilweise geschnittenen Heizkeil;
Fig. 3 eine Schnittdarstellung des Heizkeils nach Linie III-III der Fig. 2

Das Gehäuse der Schweißmaschine besteht aus einer Grundplatte (1), die eine vertikale Säule (2) trägt, einem Sockel (3) und einem Arm (4), der in einen Kopf (5) übergeht.

An einem am Kopf (5) befestigten Träger (6) ist eine obere angetriebene Druckrolle (7) und an der Säule (2) eine untere angetriebene Druckrolle (8) angeordnet.

An der Stirnseite des Kopfes (5) ist ein Träger (9) schwenkbar gelagert, auf dem ein sich im wesentlichen horizontal erstreckender Heizkeil (10) befestigt ist. Der Heizkeil (10) weist einen aus Silber gefertigten Schaft (11) auf, der in ein Keilstück (12) übergeht. Im vorderen, mit der Kante (13) abschließenden Teil des Keilstückes (12) sind in den Eckbereichen zwei an die Keilform angepaßte Einsätze (14, 15) befestigt, die aus rostfreiem Stahl bestehen. Auf diese Weise ist das Keilstück (12) in drei unmittelbar aneinander angrenzende, parallel zur Vorschubrichtung (V) verlaufende Abschnitte (16, 17, 18) unterteilt, von denen der mittlere Abschnitt (16) aus einem Wirkstoff mit hoher Wärmeleitfähigkeit besteht, während die äußeren Abschnitte (17, 18) aus einem Werkstoff mit sehr viel niedrigerer Wärmleitfähigkeit bestehen.

Innerhalb des Schaftes (11) sind in bekannter Weise zwei elektrische Heizpatronen (19) angeordnet, die bis an das Keilstück (12) heranreichen. Der die Heizpatronen (19) aufnehmende Teil des Schaftes (11) ist durch eine Keramikschicht (20) und einen diese abdeckenden Blechmantel (21) umhüllt.

Die Funktionsweise ist folgende:

Die miteinander zu verschweißenden Kunststoffolien (F1, F2) werden überlappt zwischen die Druckrollen (7, 8) eingeführt, wobei die Überlappungsbreite im wesentlichen der Breite des mittleren Abschnittes (16) des Heizkeiles (10) entspricht. Anschließend wird der aufgeheizte Heizkeil (10) aus einer von den Druckrollen (7, 8) entfernten Ruhestellung zwischen die beiden Folien (F1, F2) in eine dicht vor den Druckrollen (7, 8) gelegene Arbeitsstellung geschwenkt, wodurch der vordere Teil des Keilstückes (12) mit den Folien (F1, F2) in Berührung tritt. Dies hat zur Folge, daß die mit dem mittleren Abschnitt (16) in Berührung stehenden Folienteile aufgrund des durch die hohe Wärmeleitfähigkeit des Silbers bedingten großen Energieflusses sehr rasch auf die erforderliche Schweißtemperatur aufgeheizt werden, während die mit den äußeren Abschnitten (17, 18) in Berührung stehenden Folienteile aufgrund des durch die sehr viel niedrigere Wärmeleitfähigkeit des rostfreien Stahles bedingten kleinen Energieflusses in der gleichen Zeit auf eine deutlich geringere Temperatur erwärmt werden.

Der Antrieb der Druckrollen (7, 8) wird so in Abhängigkeit vom Einschwenken des Heizkeiles (10) eingeschaltet, daß der Vorschub der Kunststoffolien (F1, F2) dann einsetzt, wenn die mit dem mittleren Abschnitt (16) in Berührung stehenden Folienteile erweicht sind. Die erweichten Folienteile werden nun durch die Druckrollen (7, 8) zusammengepreßt, wodurch sie zu einer Schweißnaht (N) miteinander verbunden werden, deren Breite im wesentlichen der Breite des mittleren Abschnittes (16) des Heizkeiles (10) entspricht.

Der vom Heizkeil (10) ausgehende Energiefluß und die Umfangsgeschwindigkeit der Druckrollen (7, 8) sind so aufeinander abgestimmt, daß der Schweißvorgang kontinuierlich abläuft.

Nach Bildung der Schweißnaht (N) kühlen sich die erwärmten Folienteile wieder ab. Da sich die Erwärmung der Folien (F1, F2) nicht auf den Überlappungs- bzw. den Schweißnahtbereich beschränkte, sondern beiderseits dieses Bereiches je eine im wesentlichen der Breite der äußeren Abschnitte (17, 18) entsprechend breite Randzone (R1, R2) auf eine niedrigere Temperatur mit erwärmt wurde, erfolgt die Abkühlung von diesen Randzonen (R1, R2) ausgehend, zeitverzögert fortschreitend in Richtung auf die Schweißnahtmitte. Aufgrund des allmählich ablaufenden Abkühlungsvorganges bildet sich bei teilkristallin strukturierten Kunststoffolien im Übergangsbereich zwischen dem nicht beheizten Folienbereich und der Schweißnaht (N) ein verhältnismäßig gleichmäßiges Strukturgefüge aus, was dazu führt, daß in diesem Bereich keine Verformung der Folien auftritt.

**Patentansprüche**

1. Verfahren zum nahtförmigen Verschweißen von teilkristallin strukturierten Kunststoffolien (F1, F2), bei dem die miteinander zu verschweißenden Bereiche der Kunststoffolien (F1, F2) durch einen zwischen ihnen angeordneten Heizkeil (10) erhitzt und durch ein diesem nachgeordnetes Druckrollenpaar (7, 8) zusammengepreßt und kontinuierlitch vorgeschoben werden, dadurch gekennzeichnet, daß die Kunststoffolien (F1, F2) durch eine ein von der Mitte in Richtung seiner Seitenkanten abnehmendes Wärmeübertragungsvermögen aufweisende Ausbildung des Heizkeiles (10) mit einem quer zur Vorschubrichtung (V) gerichteten, im Bereich der Randzonen (R1, R2) abfallenden Temperaturverlauf aufgeheizt werden.

2. Kunststoff-Schweißmaschine zur Durchführung des Verfahrens nach Anspruch 1, dadurch gekennzeichnet, daß der Heizkeil (10) in wenigstens drei unmittelbar aneinander angrenzende, parallel zur Vorschubrichtung (V) verlaufende Abschnitte, (16, 17, 18) unterteilt ist, von denen der mittlere (16) aus einem Werkstoff mit hoher Wärmeleitfähigkeit besteht und die äußeren Abschnitte (17, 18) aus einem Werkstoff mit niedriger Wärmeleitfähigkeit bestehen.

3. Kunststoff-Schweißmaschine nach Anspruch 2, dadurch gekennzeichnet, daß der mittlere Abschnitt (16) im wesentlichen der Breite der herzustellenden Schweißnaht (N) entspricht.

## Claims

1. Method of welding partially crystalline structured plastics material films (F1, F2) in a seam-like manner, whereby the regions of the plastics material films (F1, F2), which are to be welded together, are heated by a heating wedge (10), which is disposed between said regions, and are compressed by a pair of pressure rollers (7, 8), which are disposed after said wedge and are continuously advanced, characterised in that the plastics material films (F1, F2) are heated-up by an arrangement of the heating wedge (10), having a heat transmitting capacity which decreases from the centre towards its lateral edges, with a temperature gradient which is orientated transversely relative to the direction of advancement (V) and drops in the region of the edge zones (R1, R2).

2. Plastics material welding apparatus for accomplishing the method according to claim 1, characterised in that the heating wedge (10) is split-up into at least three sections (16, 17, 18), which lie immediately adjacent one another and extend parallel to the direction of advancement (V), the central section (16) being formed from a material of high thermal conductivity and the outer sections (17, 18) being formed from a material of low thermal conductivity.

3. Plastics material welding apparatus according to claim 2, characterised in that the central section (16) corresponds substantially to the width of the welding seam (N) which is to be produced.

## Revendications

1. Procédé de soudage en filet de feuilles de matières synthétiques (F1, F2) à structure semi-cristalline, selon lequel les régions à souder l'une à l'autre des feuilles de matières synthétiques (F1, F2) sont chauffées par un coin chauffant (10) disposé entre elles, et sont pressées l'une contre l'autre et avancées en continu par une paire de rouleaux de pression (7, 8) disposée à la suite de ce coin chauffant, caractérisé en ce que les feuilles de matières synthétiques (F1, F2) sont, grâce à une configuration du coin chauffant (10) présentant un pouvoir de transfert de chaleur diminuant du milieu en direction de ses arêtes latérales, chauffées avec une allure de température, orientée perpendiculairement au sens d'avance (V), qui décline dans la région des zones de bords (R1, R2).

2. Machine à souder des matières synthétiques pour la mise en oeuvre du procédé selon la revendication 1, caractérisé en ce que le coin chauffant (10) est subdivisé en au moins trois parties (16, 17, 18) directement limitrophes qui s'étendent parallèlement au sens d'avance (V), la partie centrale (16) étant réalisée en un matériau de conductibilité thermique supérieure, et les parties extérieures (17, 18) étant réalisées en un matériau de conductibilité thermique inférieure.

3. Machine à souder des matières synthétiques selon la revendication 1, caractérisé en ce que la partie centrale (16) correspond sensiblement à la largeur du filet de soudure (N) à réaliser.

*Fig. 1*

*Fig. 2*

*Fig. 3*